# EUROPÄISCHE PATENTSCHRIFT

(11) **EP 3 797 911 B1**
(45) Veröffentlichungstag und Bekanntmachung des Hinweises auf die Patenterteilung: **08.06.2022**
(21) Anmeldenummer: 20196453.3
(22) Anmeldetag: 16.09.2020
(51) Int. Cl.: B23C 5/10, B24B 3/06

(54) **SCHAFTFRÄSER UND VERFAHREN ZU DESSEN HERSTELLUNG**
SHAFT MILLING DEVICE AND METHOD OF MANUFACTURING THE SAME
FRAISE À QUEUE ET SON PROCÉDÉ DE FABRICATION

(30) Priorität: 16.09.2019 DE 102019214040
(43) Veröffentlichungstag der Anmeldung: 31.03.2021
(73) Patentinhaber: Gühring KG, 72458 Albstadt (DE)
(72) Erfinder: Ehrler, Rolf, 79331 Teningen (DE); Dallmann, Martin, 09112 Chemnitz (DE); Ebel, Jakob, 72514 Inzigkofen (DE)
(74) Vertreter: Winter, Brandl - Partnerschaft mbB

(56) Entgegenhaltungen:
- EP-A1- 3 150 313
- EP-B1- 3 150 313
- DE-A1-102014 106 886
- JP-A- 2008 036 722
- US-A1- 2014 294 528

## Beschreibung

### Technisches Gebiet

Die vorliegende Offenbarung betrifft einen Schaft- bzw. Stirnfräser gemäß dem Oberbegriff des Patentanspruchs 1, sowie auf ein Verfahren zur Herstellung eines derartigen Fräswerkzeugs.

Gattungsgemäße Fräswerkzeuge sind beispielsweise in den Druckschriften DE 10 2014 106 886 A1 oder WO 2017/144418 A1 beschrieben. Sie werden vor dem Hintergrund konzipiert, dass sie sich bei der Zerspanung mit gesteigertem Zeitspanvolumen für ein erweitertes Spektrum von Fräs-Bearbeitungsvorgängen eignen.

Es zeigt sich, dass das Fräswerkzeug gemäß DE 10 2014 106 886 A1 nur mit Abstrichen zum Schrägeintauchen bzw. Rampen geeignet ist, und beim rein axialen Eintauchen in ein Werkstück zu hohe Vorschubkräfte hat. Mit dem Fräswerkzeug gemäß WO 2017/144418 A1 wird darauf abgestellt, die Zentriereigenschaften beim axialen Eintauchen zu verbessern. Allerdings geht diese Gestaltung zulasten der Zerspanungsleistung bei weiteren Bearbeitungen, wie z.B. dem Rampen mit größeren Rampwinkeln oder beim Helix-Fräsen, insbesondere wenn es darauf ankommt, das Zeitspanvolumen auch bei der Bearbeitung von schwerer zerspanbaren Materialien, wie höherfesten Stählen oder hochfesten Gusssorten zu steigern.

Der Erfindung liegt deshalb die Aufgabe zugrunde, ein gattungsgemäßes Fräswerkzeug derart weiterzubilden, dass es bei universellem Einsatz, d.h. z. B. beim reinen "Plungen", beim Rampen, beim Taschen oder Fenster Fräsen und beim Helix-Fräsen, eine Zerspanung mit höherem Zeitspanvolumen ermöglicht. Eine weitere Aufgabe besteht darin, ein besonders wirtschaftliches Herstellungsverfahren für ein derartiges Fräswerkzeug bereitzustellen.

Diese Aufgabe wird hinsichtlich des Fräswerkzeugs durch die Merkmale des Patentanspruchs 1 und hinsichtlich des Verfahrens durch die Verfahrensschritte des Anspruchs 13 gelöst.

Eine Besonderheit des Fräswerkzeugs ist darin zu sehen, dass der sich an die radial äußeren Stirnschneidabschnitte anschließende, von den eingeschliffenen Stirntaschen gebildete Schneidenabschnitt von der Fräserstirn weg bis zur Mittelachse des Fräswerkzeugs hin durchgehend abfällt und im Bereich des Fräserkerns von einer in die betreffende Stirntasche eingebrachten Ausspitzung gebildet ist, mit der eine bis in den Bereich nahe der Mittelachse reichende Zentrumsschneide erzeugt ist. Auf diese Weise schneidet das Fräswerkzeug auch im Bereich des Fräserkerns ausreichend wirksam, um sogar ein senkrechtes Eintauchen in das Werkstück zu erlauben. Durch die erfindungsgemäße Gestaltung des Fräswerkzeugs entsteht an der Fräserstirn eine Art Hohlschliff, der zusätzlich beim Eintauchen in das Werkstück zur Zentrierung des Fräswerkzeugs genutzt werden kann. Die Stirntaschen erzeugen in Verbindung mit den zur Fräserachse stetig abfallenden Stirnschneiden eine extrem freie Stirn, insbesondere im Zentrum des Fräswerkzeugs, wodurch sich die Zerspanungsleistung beim Fräsen mit beliebigen Vorschubrichtungen, d.h. beim Rampen, Helix-Fräsen, Fenster-Fräsen, Taschenfräsen, Nuten-Fräsen oder beim sogenannten Plungen zusätzlich steigern lässt.

Die Besonderheit des Herstellungsverfahrens gemäß Anspruch 13 besteht darin, dass es mit einer extrem einfachen Kinematik der Relativbewegung zwischen Fräswerkzeug-Rohling und Schleifscheibe gelingt, nicht nur die Stirntaschen, sondern gleichzeitig sich an radial äußeren Stirnschneidabschnitte anschließenden Schneidenabschnitte auszubilden, die von der Fräserstirn weg bis zur Mittelachse durchgehend abfallen.

Vorteilhafte Weiterbildungen sind Gegenstand der Unteransprüche.

Die Stirn im Zentrum des Fräswerkzeug wir dann besonders frei, wenn - gemäß Anspruch 2 - der von den eingeschliffenen Stirntaschen gebildete Schneidenabschnitt degressiv, d.h. anfangs steil und dann zunehmend flacher zur Mittelachse abfällt.

Mit der Ausgestaltung des Fräswerkzeugs nach Anspruch 3 können die Arbeitsschritte bei der Herstellung des Anschliffs weiter vereinfacht werden. Zusätzlich kann die Ausspitzung einer Zentrumsschneide gleichzeitig zur Ausbildung der Freifläche der in Drehrichtung benachbart vorlaufenden Schneidenabschnitte der Stirntasche dienen.

Wenn - gemäß Anspruch 5 - die radial äußeren Stirnschneidabschnitte durch die Stirntaschen korrigiert sind, wird das Fräswerkzeug im Bereich des Übergangs von Umfangsschneide zum radial äußeren Stirnschneidabschnitt stabiler, was sich positiv auf die Standzeit des Fräswerkzeugs auswirkt.

Es hat sich gezeigt, dass die Beanspruchung des Fräserkerns und der Schneiden auch im Universaleinsatz dann besonders günstig wird, wenn die durch die Ausspitzung gebildeten Zentrumsschneiden () in einem Bereich liegen, der einen Durchmesser im Bereich von 0,1 bis 0,18xD, vorzugsweise im Bereich von 0,13 bis 0,15xD hat, wobei D den Nenndurchmesser des Fräswerkzeugs bezeichnet.

Versuche haben gezeigt, dass sich ein optimaler Spanraum bei gleichzeitiger guter Stabilität der Schneiden dann ergibt, wenn die axiale Tiefe der Stirntaschen im Bereich zwischen 0,06 bis 0,14xD, vorzugsweise zwischen 0,08 und 0,12xD liegt.

Mit einer Eckenschutzfase gemäß Anspruch 8 wird die Standzeit der Stirnschneide weiter angehoben.

Um die Laufruhe des Fräswerkzeugs zu verbessern bzw. dessen Schwingungsneigung zu verringern, ist es von Vorteil, wenn die Umfangsschneiden eine ungleiche Schneidenteilung haben. Dabei können sie durchaus identische Drallwinkel haben, wodurch sich eine vereinfachte Herstellung der Spannuten ergibt.

Die Gestaltung des Fräswerkzeugs gemäß Anspruchssatz hat sich als besonders vorteilhaft im Nenndurchmesserbereich von 6 bis 20 mm herausgestellt. Dabei ist es tendenziell vorteilhaft, wenn die Anzahl der Umfangsschneiden mit zunehmendem Nenndurchmesser (DN) größer wird. Außerdem ist es von Vorteil, wenn der jeweils gewählte Drallwinkel der Umfangsschneiden mit zunehmender Anzahl der Umfangsschneiden kleiner gewählt wird.

Im Übrigen kann das Fräswerkzeug zusätzlich mit an sich bekannten gestalterischen Details herkömmlicher gattungsbildender Fräswerkzeuge, wie z.B. von Schneidenverrundungen und dgl., ausgestattet werden, auf deren Beschreibung hier verzichtet werden kann. Der Zerspanungsleistung besonders zuträglich sind jedoch Spanteiler in den Umfangsschneiden.

Das erfindungsgemäße Fräswerkzeug entfaltet seine Leistung erst dann, wenn es ausreichend stabil bzw. steif ist. Deshalb ist es von besonderem Vorteil, wenn es einstückig aus einem Hartstoff, wie z.B. aus Vollhartmetall (VHM), vorzugsweise Feinstkorn-Hartmetall, ausgebildet wird.

Das erfindungsgemäße Herstellungsverfahren wird weiter dadurch vereinfacht, dass der Schneidenabschnitt im Bereich des Fräserkerns von einer in die Stirntasche eingebrachten Ausspitzung gebildet wird, mit der eine bis in den Bereich nahe der Mittelachse reichende Zentrumsschneide erzeugt wird. Somit kann durch zwei einfache Schleifoperationen der gesamte Stirnanschliff des Fräswerkzeugs hergestellt werden.

Eine zusätzliche Vereinfachung des Herstellungsverfahrens erlaubt der Verfahrensschritt des Anspruchs 15, wonach bei der Herstellung der Ausspitzung gleichzeitig die Freiflächen der in Drehrichtung benachbart vorlaufenden Zentrumsschneiden und vorzugsweise der in Drehrichtung benachbart vorlaufenden Schneidenabschnitte erzeugt werden.

Es konnte gezeigt werden, dass sich die Stirntaschen sogar mit einer nur linear bewegten Profilschleifscheibe herstellen lassen.

Nachstehend werden anhand schematischer Zeichnungen Ausführungsbeispiele der Erfindung näher erläutert. Es zeigen:
Fig. 1 eine perspektivische Ansicht des Schneidteils eines Fräswerkzeugs;;
Fig. 2 eine Seitenansicht des Fräswerkzeugs gemäß Figur 1 ;
Fig. 3 eine Draufsicht des Fräswerkzeugs gemäß Figur 1 ;
Fig. 4 eine perspektivische Ansicht des Schneidteils des Fräswerkzeugs in einer modifizierten Drehstellung;
Fig. 5 in vergrößertem Maßstab die Einzelheit "V" in Fig. 4;
Fig. 6 einen Längsschnitt des Fräswerkzeugs durch die Werkzeugachse mit einer ersten Gestaltung der Stirnschneiden;
Fig. 7 einen Längsschnitt des Fräswerkzeugs durch die Werkzeugachse mit einer zweiten Gestaltung der Stirnschneiden;
Fig. 8 einen Längsschnitt des Fräswerkzeugs durch die Werkzeugachse mit einer dritten Gestaltung der Stirnschneiden;
Fig. 9 bis 12 vier Varianten eines Methode zur Herstellung einer Stirntasche des Fräswerkzeugs;
Fig. 13 und 14 schematische Ansichten zur Erläuterung der Kinematik bei der Herstellung der Stirntasche des Fräswerkzeugs;
Fig. 15 eine Draufsicht des Fräswerkzeugs mit Markierung der von der Schleifscheibe bei der Herstellung der Stirntaschen und der Ausspitzung erzeugten Flächen; und
Fig. 16 eine Schnittansicht des Fräswerkzeugs mit Markierung der von der Schleifscheibe bei der Herstellung der Stirntaschen und der Ausspitzung erzeugten Flächen.

### Beschreibung der Ausführungsbeispiele

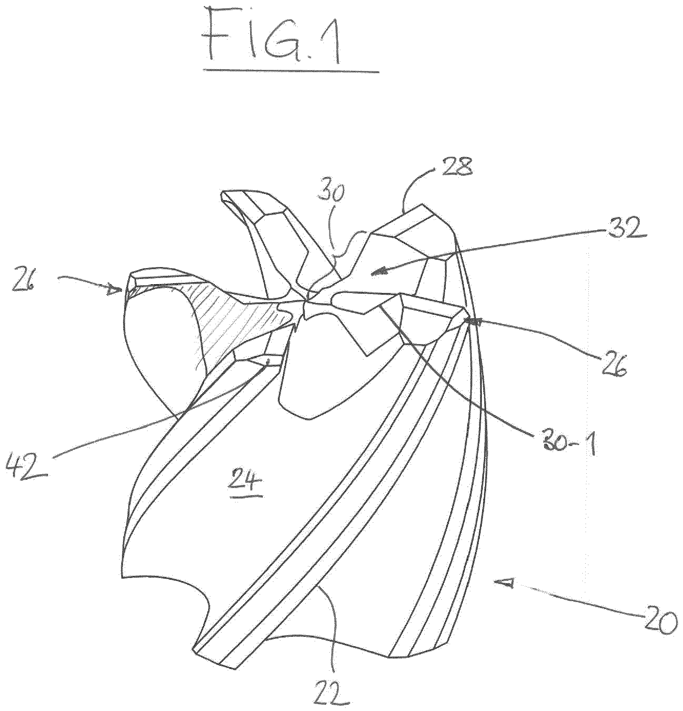

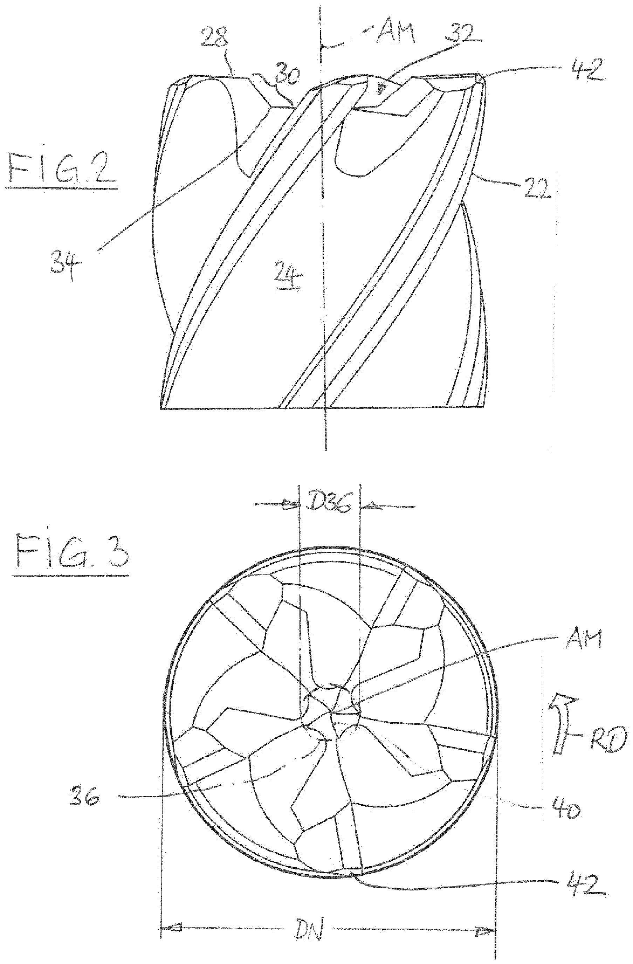

In Figur 1 ist mit dem Bezugszeichen 20 der zylindrische Schneidteil eines Fräswerkzeugs in der Ausgestaltung als Schaftfräser bezeichnet. Der kreiszylindrische Schaftteil, der dieselbe Mittelachse AM (siehe Figur 2 und 3) wie der Schneidteil 20 hat, und mit dem das Fräswerkzeug in ein Spannfutter einspannbar ist, ist nicht dargestellt. Der Nenndurchmesser DN des Fräswerkzeugs liegt vorzugsweise zwischen 6 und 20 mm. Die Drehrichtung des Fräswerkzeugs ist mit RD bezeichnet.

Der Schneidteil 20 hat zumindest drei, bei der gezeigten Ausführungsform 5 wendeiförmig verlaufende und durch Spannuten 24 voneinander getrennte Umfangsschneiden 22, die beispielsweise einen Drallwinkel, d.h. einen Spiral- oder Steigungswinkel (als der Winkel, unter dem die Umfangsschneide 22 mit einer die Achse des Fräswerkzeugs enthaltenden Ebene einschließt, im Bereich von 30 bis 40° haben. Bei der gezeigten Ausführungsform mit 5 Umfangsschneiden 22 beträgt der Drallwinkel beispielsweise 38°. Wenn - bei größeren Nenndurchmessern - die Anzahl der Umfangsschneiden 22 erhöht wird, z.B. auf 7 Schneiden, liegt der Drallwinkel im Bereich von 32°. Die Drallwinkel der einzelnen Umfangsschneiden 22 können auch voneinander geringfügig abweichen, wodurch sich die Laufruhe des Fräswerkzeugs verbessern lässt.

Die Umfangsschneiden 22 setzen sich über Schneideneckbereiche 26 in im Wesentlichen radial verlaufende Stirnschneiden fort, die mehrere Abschnitte aufweisen:
An radial äußere Stirnschneidabschnitte 28 schließt sich - wie am besten aus der Darstellung gemäß Figur 2 ersichtlich - jeweils ein Schneidenabschnitt 30 an, der von in die Fräserstirn eingeschliffenen Stirntaschen 32 gebildet wird und zur Mittelachse AM des Fräswerkzeugs von der Fräserstirn weg abfällt. Der Schneidenabschnitt 30 ist bei der Ausführungsform gemäß Figur 1 bis 6 geknickt, d.h. er hat einen ersten Schneidenabschnitt 30-1, der relativ steil zur Mittelachse AM abfällt, und an einem Schneidenknick 34 - siehe Figur 2 - in einen flacher abfallenden zweiten Schneidenabschnitt 30-2 übergeht.

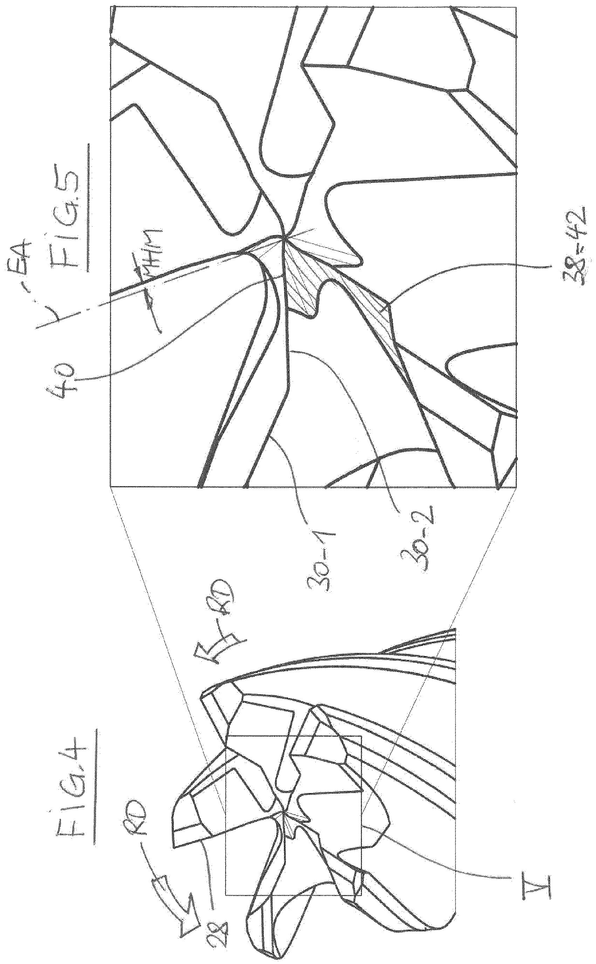

Somit wird sichergestellt, dass der Schneidenabschnitt 30 bis zur Mittelachse AM hin durchgehend abfällt. Im Bereich des Fräserkerns, d.h. eines Fräser-Restkerns 36, der in Figur 3 mit strichpunktierter Linie eingezeichnet ist, wird der von eingeschliffenen Stirntaschen gebildete Schneidenabschnitt 30 von einer in die Stirntasche 32 eingebrachten Ausspitzung 38 gebildet, mit der eine bis in den Bereich nahe der Mittelachse AM reichende Zentrumsschneide 40 erzeugt ist. Die Ausspitzung 38 ist am besten aus der Darstellung gemäß Figur 5 ersichtlich. Dort ist eine von der Ausspitzung 38 erzeugte Ausspitzungsfläche schraffiert hervorgehoben. Auf diese Weise wird eine Stirnschneidenanordnung erzeugt, die vom Schneideneckbereich 26 ausgehend bis nahe zum Fräserzentrum einen positiven Spanwinkel aufweisen kann.

Aus Figur 5 ist darüber hinaus erkennbar, dass die Zentrumsschneiden 40 und die von den eingeschliffenen Stirntaschen 32 gebildeten Schneidenabschnitte 30-2 um ein vorbestimmtes Maß MHM hinter Mitte liegen, d.h. um das Maß MHM zu einer Axialebene EA entgegen der Drehrichtung RD versetzt liegen. Dadurch wird der Anschliff des Fräserzentrums vereinfacht. Die radial äußeren Stirnschneidabschnitte 28 liegen vorzugsweise um ein geringes Maß vor Mitte. Dieses Maß wurde durch Versuche zu dem etwa 0,05-fachen des Nenndurchmessers DN bestimmt.

Die radiale Länge der radial äußeren Stirnschneidabschnitte 28 kann im Anhängigkeit von der Zerspanungsaufgabe und des zu zerspanenden Werkstoffs in gewissen Bereichen variiert werden, um auf das Spanvolumen Einfluss zu nehmen.

Man erkennt, dass die Ausspitzung 38 einer Stirnschneide, gleichzeitig die Freifläche 42 der in Drehrichtung RD benachbart vorlaufenden Zentrumsschneide 40 und der in Drehrichtung vorlaufenden Schneidenabschnitte 30-1 und 30-2 bildet. Die Ausspitzung 38 kann hinsichtlich ihrer Tiefe, Form und Lage je nach Einsatzgebiet des Fräswerkzeugs unterschiedlich gestaltet werden, wodurch auf den Freiwinkel der Zentrumsschneiden 40 und der Schneidenabschnitte 30-1 und 30-2, sowie auf den Spanwinkel der Zentrumsschneiden 40 Einfluss genommen werden kann. Bei der Ausführungsform gemäß Figur 1 bis 6 ist der Spanwinkel im Bereich des Übergangs vom von zweiten Schneidenabschnitt 30-2 zur Zentrumsschneide 40 (siehe Figur 5) sogar positiv.

In Figur 3 ist der Fräser-Restkern 36, in dem die durch die Ausspitzung 38 gebildeten Zentrumsschneiden 40 liegen, mit strichpunktierter Linie angedeutet. Es hat sich in Versuchen gezeigt, dass es zur Realisierung der angestrebten Schnittleistungen des Fräswerkzeugs bei Sicherstellung guter Standwege der Schneiden von Vorteil ist, einen Durchmesser D36 im Bereich von Werten zu halten, die dem 0,1 bis 0,18-fachen, vorzugsweise dem 0,13 bis 0,15-fachen, beispielsweise dem 0,14-fachen des Nenndurchmessers DN des Fräswerkzeugs entsprechen.

Die beschriebene Ausführung des Spitzenanschliffs des Fräswerkzeugs führt also zum einen dazu, dass das Fräswerkzeug quasi bis zum Zentrum schneidet. Zusätzlich wird die Fräserstirn durch die Stirntaschen 32 in bislang nicht gekannter Weise geöffnet, wodurch sich gute Zerspanungsverhältnisse im Universal-Fräsbetrieb, insbesondere beim Rampen und beim Eintauchen im Helix-Fräsbetrieb ergeben. Versuche haben gezeigt, dass in einem solchen Fräsbetrieb die Zustellung im Bereich des 0,05-fachen des Nenndurchmessers DN liegen kann.

Durch zusätzliche Maßnahmen kann die Standzeit der Schneiden weiter verbessert werden, beispielsweise dadurch, dass ein Übergangsbereich von Umfangsschneide 22 und radial äußerem Stirnschneidabschnitt 28, also der Schneideneckbereich 26 eine Eckenschutzfase 42 erhält. Zusätzlich können auch weitere Schneidenverrundungen vorgesehen werden.

Aus den Darstellungen der Figuren 1 bis 6 ist ferner erkennbar, dass die Herstellung der Stirntaschen 32 gleichzeitig dazu genutzt wird, den Verlauf der radial äußeren Stirnschneidabschnitte 28 zu korrigieren, was sich aus der in Figur 1 hervorgehobenen Schraffur der von der Stirntasche 32 erzeugten Fläche ergibt, welche den radial äußeren Stirnschneidabschnitt 28 erreicht.

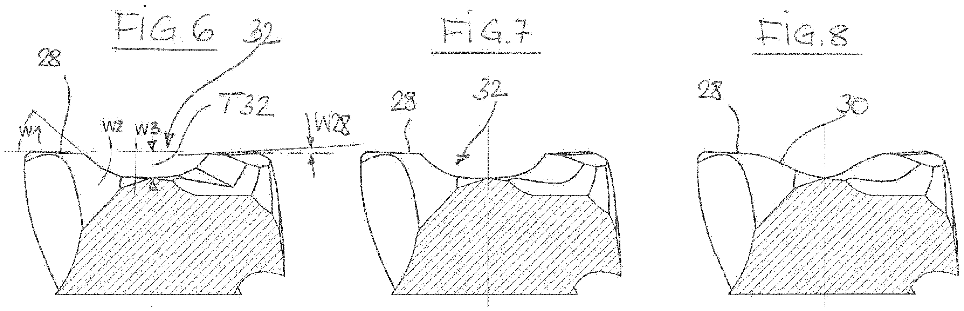

Aus der vorstehenden Beschreibung ergibt sich also, dass der von den eingeschliffenen Stirntaschen 32 gebildete Schneidenabschnitt 30 degressiv zur Mittelachse AM abfällt, wodurch das Volumen der Stirntaschen 32 möglichst groß wird. Die Zentrumsschneiden 40 laufen damit im Zentrum des Fräswerkzeugs quasi ineinander und bilden den Boden der Stirntasche. Versuche haben ergeben, dass ein besonders guter Kompromiss von Zerspanung, Universalität des Einsatzgebiets, Späneabfuhr und Schneiden-Standzeit dann erzielbar ist, wenn die axiale Tiefe T32-siehe Figur 6 - der Stirntaschen 32 in einem Bereich liegen, der dem 0,06 bis 0,14-fachen, vorzugsweise dem 0,08 und 0,12- fachen, beispielsweise dem 0,1-fachen des Nenndurchmessers DN entspricht.

In den Figuren 6 bis 8 sind Varianten des Verlaufs der Stirnschneiden 28, 30 und 40 gezeigt.

Bei der Variante gemäß Figur 6 fallen bereits die radial äußeren Stirnschneidabschnitte 28 unter einem kleinen Winkel W28, der beispielsweise in einem Bereich von 0,5 bis 2° liegt, zum Zentrum des Fräswerkzeugs ab.

Der größte Fallwinkel W1 liegt im Bereich des Schneidenabschnitts 30-1. Er beträgt beispielsweise 45°. Der sich anschließende Fallwinkel W2 des Schneidenabschnitts 30-2 ist wesentlich kleiner und beträgt beispielsweise lediglich 1 bis 2°.

Der dritte Fallwinkel W3, d.h. der Fallwinkel der Zentrumsschneiden 40 ergibt sich durch die Geometrie und Lageanordnung der Ausspitzung 38 bzw. der Freifläche 42. Er ist bei der Darstellung gemäß Figur 6 kleiner als W2, kann aber auch größer sein als der Fallwinkel W2.

Die Figuren 7 und 8 zeigen Varianten der Gestaltung der Stirntaschen 32. Gemäß Figur 7 folgt der von den eingeschliffenen Stirntaschen 32 gebildete Schneidenabschnitt einer knickfreien konvexen Linie. Bei der Variante gemäß Figur 8 gehen die radial äußeren Stirnschneidabschnitten 28 abgerundet in die von eingeschliffenen Stirntaschen 32 gebildeten Schneidenabschnitte 30 über. Die Stirnschneiden folgen also insgesamt einer S-Linie.

Zur Verringerung der Schwingungsneigung des Fräswerkzeugs haben die Umfangsschneiden 22 eine ungleiche Schneidenteilung. Wenn identische Drallwinkel gewählt werden, sind also die Stirnschneiden 28 in Umfangsrichtung ungleich beabstandet. Alternativ können die Drallwinkel zumindest zweier Umfangsschneiden 22 zueinander unterschiedlich sein. In diesem Fall kann eine Gleichteilung der Umfangsschneiden 22 in einer zur Mittelachse AM senkrechten Radialebene im Schneidteil 20 vorliegen.

Vorzugsweise wird die Anzahl der Umfangsschneiden 22 mit zunehmendem Nenndurchmesser DN größer, wobei weiter vorteilhafter Weise Drallwinkel mit zunehmender Anzahl der Umfangsschneiden 22 kleiner gewählt ist.

Zusätzlich können die Umfangsschneiden 22 in an sich bekannter Weise mit nicht näher dargestellten Spanteilern ausgebildet sein.

In der Regel wird das vorstehend beschriebene Fräswerkzeug einstückig aus einem Hartstoff, wie z.B. aus Vollhartmetall (VHM), vorzugsweise Feinstkorn-Hartmetall, hergestellt, damit eine ausreichende Stabilität und Schneiden-Standzeit sichergestellt werden kann.

Die Besonderheit des vorstehend beschrieben Fräswerkzeugs besteht auch darin, dass es mittels eines recht einfachen Verfahrens hergestellt werden kann.

Denn zur Herstellung der in der Regel radial verlaufenden Stirnschneiden 28, 30, 40 muss nur eine der Anzahl der Umfangsschneiden 22 entsprechende Anzahl von Stirntaschen 32 eingeschliffen werden, damit die sich an radial äußere Stirnschneidabschnitte 28 anschließende Schneidenabschnitte 30-1, 30-2 ausgebildet werden, die von der Fräserstirn weg bis zur Mittelachse AM durchgehend abfallen.

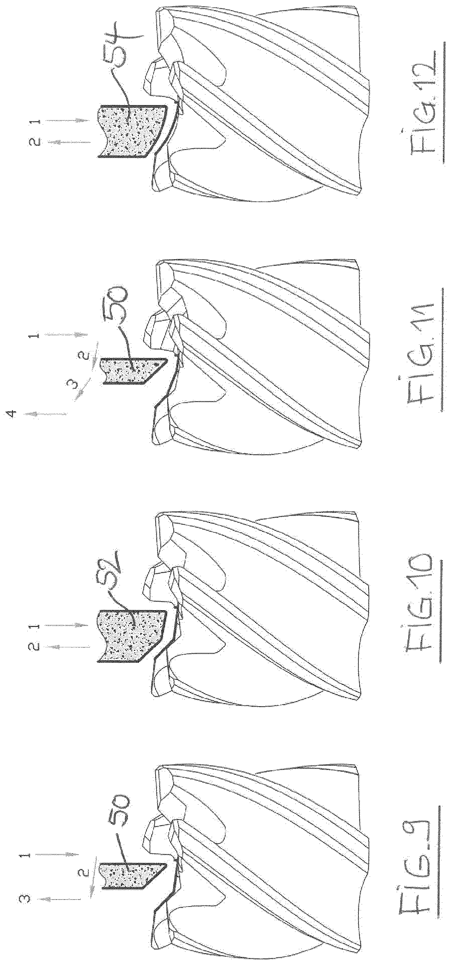

Varianten zur Herstellung der von eingeschliffenen Stirntaschen 32 gebildeten Schneidenabschnitte 30-1, 30-2 sind in den Figuren 9 bis 12 gezeigt.

Bei der Variante gemäß Figur 9 wird die Stirntasche 32 mittels einer schmalen Profilschleifscheibe 50 hergestellt, die lediglich in einer U-Form bewegt werden muss, mit den Zustellbewegungen 1, 2 und 3.

Die Variante gemäß Figur 10 arbeitet mit einer Profilschleifscheibe 52, die ein Knickprofil hat und lediglich eine Ein- und Austauchbewegung 1 und 2 ausführt. Diese Variante, wie auch die Variante gemäß Figur 9 kann den Schneidenverlauf der in den Figuren 1 bis 6 geteigten Ausführungsform herstellen.

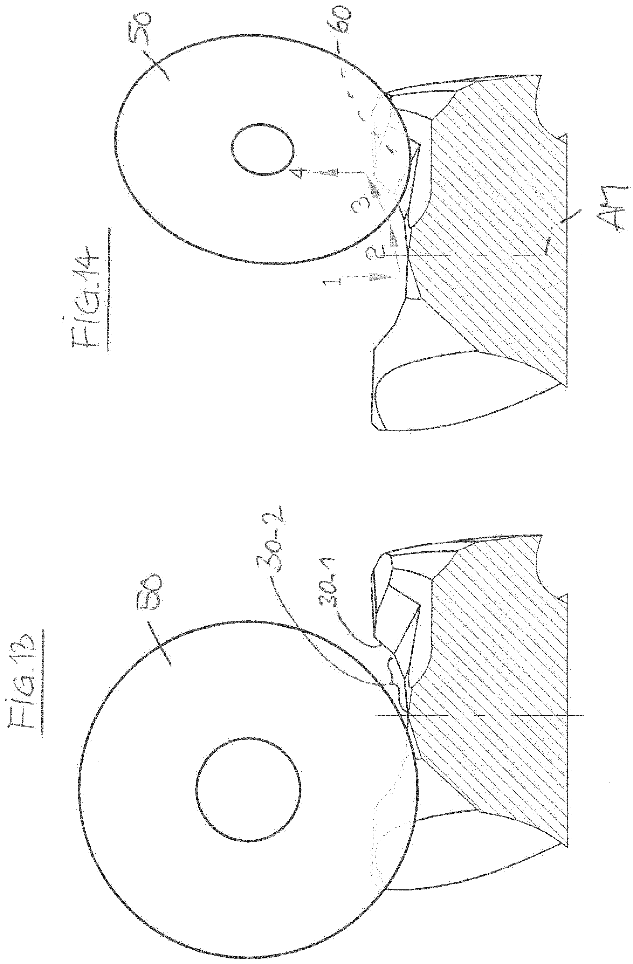

Die Variante gemäß Figur 11 modifiziert die Variante nach Figur 9 derart, dass sie in dem von den eingeschliffenen Stirntaschen 32 gebildeten Schneidenabschnitt einen weiteren Knickpunkt erzeugt, so dass Schleifarbeiten in 4 Bewegungsrichtungen 1, 2, 3 und 4 ausgeführt werden. In den Figuren 13 und 14 ist dieser Bewegungsablauf in vergrößerter Darstellung gezeigt. Die Schleifscheibe 50 taucht im Bereich des Fräserzentrums AM in den Werkzeugrohling ein (Bewegungsrichtung 1) und wird dann radial nach außen mit den immer steiler werdenden Bewegungsrichtungen 2 und 3 geführt, und schließlich mit der Richtung 4, nachdem die Flanke 60 geschliffen ist, vom Rohling abgehoben.

Die Variante nach Figur 12 schließlich entspricht der Variante gemäß Figur 10 mit dem Unterschied, dass das Schleifscheibenprofil modifiziert ist.

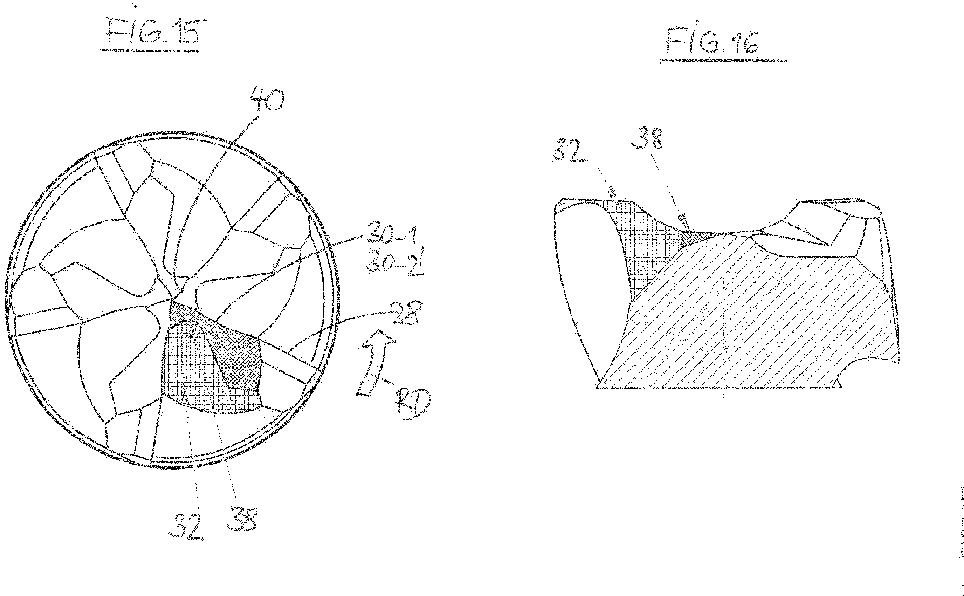

Das endgültige Aussehen des Spitzenanschliffs wird dann dadurch erhalten, dass der Schneidenabschnitt im Bereich des Fräserkerns, bzw. Fräser-Restkerns 36 von einer in die Stirntasche 32 eingebrachten Ausspitzung 38 gebildet wird, mit der die bis in den Bereich nahe der Mittelachse AM reichende Zentrumsschneide 40 erzeugt wird. Dabei geht man vorzugsweise so vor, dass bei der Herstellung der Ausspitzung 38 gleichzeitig die Freiflächen 42 der in Drehrichtung RD benachbart vorlaufenden Zentrumsschneiden 40 und vorzugsweise der in Drehrichtung benachbart vorlaufenden Schneidenabschnitte 30-1, 30-2 erzeugt werden, was aus der Darstellung gemäß Figur 15 und 16 hervorgeht. Die Ausspitzung 38 ist mit der eng schraffierten Fläche kenntlich gemacht, die von der eingeschliffenen Stirntasche 32 erzeugte Fläche mit der weiter schraffierten Fläche.

Der Anschliff des Fräswerkzeugs lässt sich demnach mit einer linear bewegten Profilschleifscheibe herstellen, wenn der Durchmesser der Profilschleifscheibe groß genug gewählt wird. Bei kleinerem Scheibendurchmesser kann ein weiterer Bewegungsfreiheitsgrad hinzugenommen werden.

Selbstverständlich sind Abweichungen von den gezeigten Ausführungsformen möglich, ohne den Grundgedanken der Erfindung zu verlassen.

So können beispielsweise zusätzlich zu den gezeigten Stirnschneiden 28, 30-1, 30-2, 40 dazwischen liegende radial äußere Stirnschneiden liegen, an die sich keine Schneidenabschnitte 30 anschließen.

Die Stirnschneiden können auch - in der Draufsicht betrachtet - konvex oder konkav verlaufen, sie sind nicht grundsätzlich radial auszurichten.

Die Schneiden können auch mit Primär- und Sekundär-Freiwinkeln ausgestattet werden. Auch die Spanwinkel können - in Abhängigkeit vom Material des Fräswerkzeugs und/oder vom zu zerspanenden Material - variieren.

Die Erfindung schafft somit ein Fräswerkzeug, insbesondere in der Ausgestaltung als Schaftfräser, mit einem zylindrischen, eine Mittelachse aufweisenden Schaftteil, an den sich ein zylindrischer Schneidteil mit zumindest drei, vorzugsweise zumindest 5 wendeiförmig verlaufenden und durch Spannuten voneinander getrennten Umfangsschneiden anschließt. Die Umfangsschneiden setzen sich über Schneideneckbereiche in im Wesentlichen radial verlaufende Stirnschneiden fort, die im Anschluss von radial äußeren Stirnschneidabschnitten jeweils mit einem von eingeschliffenen Stirntaschen gebildeten Schneidenabschnitt zur Mittelachse von der Fräserstirn () weg abfallen. Um das Einsatzgebiet des Fräswerkzeugs bei verbesserten Zeitspanvolumen universeller zu machen, fällt der Schneidenabschnitt bis zur Mittelachse hin durchgehend ab und er wird im Bereich des Fräserkerns von einer in die Stirntasche eingebrachten Ausspitzung gebildet ist, mit der eine bis in den Bereich nahe der Mittelachse reichende Zentrumsschneide erzeugt ist.

## Patentansprüche

1. Fräswerkzeug, insbesondere in der Ausgestaltung als Schaftfräser, mit einem zylindrischen, eine Mittelachse aufweisenden Schaftteil, an den sich ein zylindrischer Schneidteil (20) mit zumindest drei wendeiförmig verlaufenden und durch Spannuten (24) voneinander getrennten Umfangsschneiden (22) anschließt, welche sich über Schneideneckbereiche (26) in im Wesentlichen radial verlaufende Stirnschneiden (28, 30, 40) fortsetzen, die im Anschluss von radial äußeren Stirnschneidabschnitten (28) jeweils mit einem von eingeschliffenen Stirntaschen (32) gebildeten Schneidenabschnitt (30) zur Mittelachse (AM) von der Fräserstirn weg abfallen, **dadurch gekennzeichnet, dass** der Schneidenabschnitt (30) bis zur Mittelachse (AM) hin durchgehend abfällt und im Bereich des Fräserkerns (36) von einer in die Stirntasche (32) eingebrachten Ausspitzung (38) gebildet ist, mit der eine bis in den Bereich nahe der Mittelachse (AM) reichende Zentrumsschneide (40) erzeugt ist.

2. Fräswerkzeug nach Anspruch 1, **dadurch gekennzeichnet, dass** der von eingeschliffenen Stirntaschen (32) gebildete Schneidenabschnitt (30) degressiv zur Mittelachse (AM) abfällt.

3. Fräswerkzeug nach Anspruch 1 oder 2, **dadurch gekennzeichnet, dass** die Ausspitzung (38) einer Zentrumsschneide (40) von der Freifläche (42) der in Drehrichtung (RD) benachbart vorlaufenden Zentrumsschneide (40) gebildet ist.

4. Fräswerkzeug nach einem der Ansprüche 1 bis 3, **dadurch gekennzeichnet, dass** der von eingeschliffenen Stirntaschen (32) gebildete Schneidenabschnitt 30() einen steiler abfallenden ersten Abschnitt (30-1) und einen sich daran anschließenden flacheren zweiten Abschnitt (30-2) aufweist, der sich bis zur Zentrumsschneide (40) erstreckt.

5. Fräswerkzeug nach einem der Ansprüche 1 bis 4, **dadurch gekennzeichnet, dass** die radial äußeren Stirnschneidabschnitte (28) durch die Stirntaschen (32) korrigiert sind.

6. Fräswerkzeug nach einem der Ansprüche 1 bis 5, **dadurch gekennzeichnet, dass** der Fräserkern (36), in dem die durch die Ausspitzung (38) gebildeten Zentrumsschneiden (40) liegen, einen Durchmesser im Bereich von 0,1 bis 0,18xD, vorzugsweise im Bereich von 0,13 bis 0,15xD hat, wobei D den Nenndurchmesser des Fräswerkzeugs bezeichnet.

7. Fräswerkzeug nach einem der Ansprüche 1 bis 6, **dadurch gekennzeichnet, dass** die axiale Tiefe (T32) der Stirntaschen (32) im Bereich zwischen 0,06 bis 0,14xD, vorzugsweise zwischen 0,08 und 0,12xD liegt.

8. Fräswerkzeug nach einem der Ansprüche 1 bis 7, **dadurch gekennzeichnet, dass** der Übergangsbereich von Umfangsschneide (22) und radial äußerem Stirnschneidabschnitt (28) eine Eckenschutzfase (42) hat.

9. Fräswerkzeug nach einem der Ansprüche 1 bis 8, **dadurch gekennzeichnet, dass** die Umfangsschneiden (22) eine ungleiche Schneidenteilung und vorzugsweise identische Drallwinkel haben.

10. Fräswerkzeug nach einem der Ansprüche 1 bis 9, **dadurch gekennzeichnet, dass** die Umfangsschneiden (22) mit Spanteilern ausgebildet sind.

11. Fräswerkzeug nach einem der Ansprüche 1 bis 10, **dadurch gekennzeichnet, dass** es einstückig aus einem Hartstoff, wie z.B. aus Vollhartmetall (VHM), vorzugsweise Feinstkorn-Hartmetall, gebildet ist.

12. Verfahren zur Herstellung eines Fräswerkzeugs nach einem der Ansprüche 1 bis 11, bei dem in einen kreiszylindrischen Rohling zunächst zumindest drei, vorzugsweise zumindest 5, wendeiförmig verlaufende Spannuten (24) eingeschliffen werden und darauffolgend zur Herstellung von radial verlaufenden Stirnschneiden (28, 30, 40) eine der Anzahl der Umfangsschneiden (22) entsprechende Anzahl von Stirntaschen (32) eingeschliffen werden, mit denen sich an radial äußere Stirnschneidabschnitte (28) anschließende Schneidenabschnitte (30) ausgebildet werden, die von der Fräserstirn weg bis zur Mittelachse (AM) durchgehend abfallen.

13. Verfahren nach Anspruch 12, **dadurch gekennzeichnet, dass** der Schneidenabschnitt (30-2) im Bereich des Fräserkerns 36 von einer in die Stirntasche (32) eingebrachten Ausspitzung (38) gebildet wird, mit der eine bis in den Bereich nahe der Mittelachse (AM) reichende Zentrumsschneide (40) erzeugt wird.

14. Verfahren nach Anspruch 12 oder 13, **dadurch gekennzeichnet, dass** bei der Herstellung der Ausspitzung (38) jeweils gleichzeitig die Freiflächen (42) der in Drehrichtung benachbart vorlaufenden Zentrumsschneiden (40) und vorzugsweise der in Drehrichtung benachbart vorlaufenden Schneidenabschnitte (30-1, 30-2) erzeugt werden.

15. Verfahren nach einem der Ansprüche 12 bis 14, **dadurch gekennzeichnet, dass** die Stirntaschen (32) mit einer linear bewegten Profilschleifscheibe (50; 52; 54) hergestellt werden.

## Claims

1. Milling tool, in particular in the form of a shaft milling device, with a cylindrical shaft part having a central axis, to which a cylindrical cutting part (20) is connected with at least three helically extending circumferential cutting edges (22) separated from each other by chip flutes (24), which continue via cutting-edge corner regions (26) into substantially radially extending front cutting edges (28, 30, 40), which, following radially outer front cutting edges (28), in each case slope away from the milling cutter front with a cutting-edge portion (30) formed by ground-in front pockets (32) towards the center axis (AM), **characterized in that** the cutting-edge portion (30) slopes continuously down to the center axis (AM) and is formed in the region of the milling cutter core (36) by a point thinning (38) incorporated in the front pocket (32), by which a central cutting edge (40) extending into the region near the center axis (AM) is produced.

2. Milling tool according to claim 1, **characterized in that** the cutting-edge portion (30) formed by ground-in front pockets (32) slopes degressively to the center axis (AM).

3. Milling tool according to claim 1 or 2, **characterized in that** the point thinning (38) of a central cutting edge (40) is formed by the free surface (42) of the central cutting edge (40) leading adjacent in the direction of rotation (RD).

4. Milling tool according to one of claims 1 to 3, **characterized in that** the cutting-edge portion (30) formed by ground-in front pockets (32) has a more steeply sloping first portion (30-1) and an adjoining flatter second portion (30-2) which extends to the central cutting edge (40).

5. Milling tool according to one of claims 1 to 4, **characterized in that** the radially outer front cutting edges (28) are corrected by the front pockets (32).

6. Milling tool according to one of claims 1 to 5, **characterized in that** the milling cutter core (36), in which the central cutting edges (40) formed by the point thinning (38) are located, has a diameter in the range of 0.1 to 0.18xD, preferably in the range of 0.13 to 0.15xD, wherein D denotes the nominal diameter of the milling tool.

7. Milling tool according to one of claims 1 to 6, **characterized in that** the axial depth (T32) of the front pockets (32) is in the range between 0.06 to 0.14xD, preferably between 0.08 and 0.12xD.

8. Milling tool according to one of claims 1 to 7, **characterized in that** the transition region of circumferential cutting edge (22) and radially outer front cutting edge portion (28) has a corner protection chamfer (42).

9. Milling tool according to one of claims 1 to 8, **characterized in that** the circumferential cutting edges (22) have an unequal cutting edge division and preferably identical angles of twist.

10. Milling tool according to one of claims 1 to 9, **characterized in that** the circumferential cutting edges (22) are formed with chip splitters.

11. Milling tool according to one of claims 1 to 10, **characterized in that** it is formed in one piece from a hard material, such as solid carbide (VHM), preferably fine-grain carbide.

12. Method for producing a milling tool according to one of claims 1 to 11, in which at least three, preferably at least 5, helically extending chip flutes (24) are initially ground into a circular cylindrical blank and subsequently, in order to produce radially extending front cutting edges (28, 30, 40), a number of front pockets (32) corresponding to the number of circumferential cutting edges (22) are subsequently ground in, with which cutting-edge portions (30) are formed which adjoin radially outer front cutting edges (28) and which slope continuously away from the milling cutter front to the central axis (AM).

13. The method according to claim 12, **characterized in that** the cutting-edge portion (30-2) in the region of the milling cutter core 36 is formed by a point thinning (38) incorporated into the front pocket (32), by which a central cutting edge (40) extending into the region near the central axis (AM) is produced.

14. Method according to claim 12 or 13, **characterized in that** during the production of the point thinning (38) in each case the free surfaces (42) of the central cutting edges (40) leading adjacent in the direction of rotation and preferably of the cutting-edge portions (30-1, 30-2) leading adjacent in the direction of rotation are produced simultaneously.

15. Method according to one of claims 12 to 14, **characterized in that** the front pockets (32) are produced with a linearly moved profile grinding wheel (50; 52; 54).

## Revendications

1. Outil de fraisage, en particulier sous la forme d'une fraise à queue, avec une partie de tige cylindrique présentant un axe central, sur laquelle une partie de coupe cylindrique (20) connecte au moins trois tranchants périphériques (22) s'étendant de manière hélicoïdale et séparés les uns des autres par des cannelures à copeaux (24), qui se poursuivent par des zones d'angle de coupe (26) dans des tranchants d'extrémité (28, 30, 40) s'étendant essentiellement radialement, qui se connectent à des sections de tranchant d'extrémité radialement extérieures (28), chacune avec une section de tranchant (30) formée par des poches d'extrémité rectifiées (32), en pente en s'éloignant de l'axe central (AM) de l'extrémité de fraise, **caractérisé en ce que** la section de tranchant (30) descend en pente continue vers l'axe central (AM) et est formée dans la zone du coeur de fraise (36) par un appointissage (38) introduit dans la poche d'extrémité (32), avec lequel un tranchant central (40) atteignant la zone proche de l'axe central (AM) est réalisé.

2. Outil de fraisage selon la revendication 1, **caractérisé en ce que** la section de tranchant (30) formée par les poches d'extrémité rectifiées (32) descend en pente dégressive vers l'axe central (AM).

3. Outil de fraisage selon la revendication 1 ou 2, **caractérisé en ce que** l'amincissement (38) d'un tranchant central (40) est formé par la surface libre (42) des tranchants centraux (40) s'étendant adjacents dans la direction de rotation (RD).

4. Outil de fraisage selon l'une quelconque des revendications 1 à 3, **caractérisé en ce que** la section de tranchant (30) formée par les poches d'extrémité rectifiées (32) présente une première section de pente plus raide (30-1) et une seconde section attenante de pente plus plate (30-2), qui s'étend jusqu'aux tranchants centraux (40).

5. Outil de fraisage selon l'une quelconque des revendications 1 à 4, **caractérisé en ce que** les sections de tranchant d'extrémité radialement extérieures (28) sont corrigées par les poches d'extrémité (32).

6. Outil de fraisage selon l'une quelconque des revendications 1 à 5, **caractérisé en ce que** le cœur de fraise (36), dans lequel se trouvent les tranchants centraux (40) formées par l'appointissage (38), présente un diamètre compris entre 0,1 et 0,18xD, de préférence dans la plage de 0,13 à 0,15xD, dans lequel D est le diamètre nominal de l'outil de fraisage.

7. Outil de fraisage selon l'une quelconque des revendications 1 à 6, **caractérisé en ce que** la profondeur axiale (T32) des poches d'extrémité (32) est comprise entre 0,06 et 0,14xD, de préférence entre 0,08 et 0,12xD.

8. Outil de fraisage selon l'une quelconque des revendications 1 à 7, **caractérisé en ce que** la zone de transition entre le tranchant périphérique (22) et la section de tranchant radialement extérieure (28) présente un chanfrein de protection d'angle (42).

9. Outil de fraisage selon l'une quelconque des revendications 1 à 8, **caractérisé en ce que** les tranchants périphériques (22) présentent un pas de coupe inégal et des angles d'hélice de préférence identiques.

10. Outil de fraisage selon l'une quelconque des revendications 1 à 9, **caractérisé en ce que** les tranchants périphériques (22) sont formés avec des brise-copeaux.

11. Outil de fraisage selon l'une quelconque des revendications 1 à 10, **caractérisé en ce qu'**il est formé d'une seule pièce en un matériau dur, tel que du métal dur solide (VHM), de préférence du métal dur à grains fins.

12. Procédé de fabrication d'un outil de fraisage selon l'une quelconque des revendications 1 à 11, dans lequel d'abord au moins trois, de préférence au moins 5, cannelures à copeaux (24) s'étendant en hélice sont meulées en une ébauche circulaire cylindrique, puis, pour la fabrication de tranchants d'extrémité s'étendant radialement (28, 30, 40), un certain nombre de poches d'extrémité (32) correspondant au nombre de tranchants périphériques (22) sont rectifiées, avec lesquelles des sections de tranchants (30) attenantes aux sections de tranchant d'extrémité radialement extérieures (28) sont formées, en pente en continu de l'extrémité de fraise vers l'axe central (AM).

13. Procédé selon la revendication 12, **caractérisé en ce que** la section de tranchant (30-2) est formée dans la zone du cœur de fraise (36) par un appointissage (38) introduit dans la poche d'extrémité (32), avec lequel un tranchant central (40) atteignant la zone proche de l'axe central (AM) est réalisé.

14. Procédé selon la revendication 12 ou 13, **caractérisé en ce que** lors de la fabrication de l'appointissage (38), les surfaces libres (42) des tranchants centraux (40) s'étendant simultanément adjacentes dans la direction de rotation et de préférence des tronçons de tranchant (30-1, 30-2) s'étendant adjacents dans la direction de rotation sont générés.

15. Procédé selon l'une quelconque des revendications 12 à 14, **caractérisé en ce que** les poches d'extrémité (32) sont réalisées avec une meule profilée (50; 52; 54) à déplacement linéaire.
